# EUROPÄISCHE PATENTSCHRIFT

(11) **EP 2 185 317 B1**
(45) Veröffentlichungstag und Bekanntmachung des Hinweises auf die Patenterteilung: **02.03.2011**
(21) Anmeldenummer: 08803102.6
(22) Anmeldetag: 20.08.2008
(51) Int. Cl.: B23Q 11/08

(54) **WERKZEUGMASCHINE MIT MINDESTENS EINER SCHIEBETÜRE**
MACHINE TOOL COMPRISING AT LEAST ONE SLIDING DOOR
MACHINE-OUTIL COMPRENANT AU MOINS UNE PORTE COULISSANTE

(30) Priorität: 07.09.2007 DE 102007044290
(43) Veröffentlichungstag der Anmeldung: 19.05.2010
(73) Patentinhaber: MAG IAS GmbH, 73033 Göppingen (DE)
(72) Erfinder: MEIDAR, Moshe Israel, New York, NY 10022 (US); HORN, Wolfgang, 73035 Göppingen (DE); HOMMEL, Gerhard, 73121 Geislingen (DE); GUNZENHAUSER, Markus, 89558 Böhmenkirch (DE)
(74) Vertreter: Hoeger, Stellrecht & Partner Patentanwälte
(86) Internationale Anmeldenummer: PCT/EP2008/060869
(87) Internationale Veröffentlichungsnummer: WO 2009/033920

(56) Entgegenhaltungen:
- EP-A- 1 413 393
- EP-A- 1 527 846
- DE-A1-102006 003 985
- FR-A- 2 711 569
- US-A1- 2005 031 425

## Beschreibung

Die Erfindung betrifft eine Werkzeugmaschine, umfassend ein Maschinengestell, mindestens eine Werkzeugträgereinrichtung, welche an dem Maschinengestell beweglich gehalten ist, einen Arbeitsraum, in welchem Werkstücke bearbeitbar sind, eine Arbeitsraumverkleidung, und mindestens einen Werkstückschlitten, welcher an einer Bahnführungseinrichtung relativ zum Maschinengestell verschieblich ist, wobei die Bahnführungseinrichtung seitlich neben dem Arbeitsraum angeordnet ist.

Aus der EP 0 614 724 B1 ist eine Werkzeugmaschine bekannt, bei welcher ein an einem Maschinengestell angeordneter Werkzeugträger über Schlitten längs einer ersten Achse und längs einer quer zur ersten Achse verlaufenden Achse verfahrbar ist. Ein Werkstückträger ist auf einem in der dritten Richtung quer zur ersten und zweiten Richtung verfahrbaren Schlitten gehalten.

Aus der DE 100 49 810 A1 ist eine Werkzeugmaschine mit einem Werkstückträger bekannt, der um eine Drehachse drehbar ist. Eine Führung des Spindelstocks ist Bestandteil eines rechteckigen Rahmens, der ein Fenster umschließt, in welchem der Spindelstock bewegbar ist. Das Fenster weist eine Jalousie mit einer sich der Position des Spindelstocks anpassenden Öffnung auf.

Aus der DE 10 2004 034 171 A1 ist eine Anordnungsstruktur einer Werkzeugmaschine bekannt.

Aus der DE 20 2006 009 653 U1 ist ein Bearbeitungszentrum mit einer an einem Maschinengrundträger angebrachten, umlaufenden Schutzverkleidung mit einer breiten Beschickungsöffnung an einer Längsseite bekannt.

Aus der DE 10 2006 003 985 A1 ist eine Werkzeugmaschine bekannt, welche ein Maschinengestell mit einem Maschinenbett umfasst. An dem Maschinenbett sind Bearbeitungseinheiten gehalten, von denen mindestens eine eine Werkstückspindel ist und mindestens eine ein Werkzeugträger ist. Es ist ein Arbeitsraum vorgesehen und es ist ein Handhabungsraum vorgesehen, wobei eine den Arbeitsraum begrenzende Wand mit einem Durchbruch versehen ist und mit einer Handhabungseinrichtung durch den Durchbruch hindurch Werkstücke in die Werkstückspindel einsetzbar und/oder aus dieser entnehmbar sind.

Der Erfindung liegt die Aufgabe zugrunde, eine Werkzeugmaschine der eingangs genannten Art bereitzustellen, welche auf einfache Weise wartbar ist.

Diese Aufgabe wird erfindungsgemäß dadurch gelöst, dass mindestens eine Schiebetüre für einen Arbeitsraumzugang vorgesehen ist, welche an der Bahnführungseinrichtung des mindestens einen Werkstückschlittens angeordnet ist, und dass an dem mindestens einen Werkstückschlitten und einem Endbereich der zugeordneten Bahnführungseinrichtung mindestens ein beweglicher Schieber angeordnet ist, welcher die Bahnführungseinrichtung gegenüber dem Arbeitsraum abdeckt.

Durch die seitliche Anordnung der mindestens einen Bahnführungseinrichtung ist ein großer Arbeitsraum bereitgestellt. Werkstücke können in den Arbeitsraum über Frontbeladung oder Topbeladung eingebracht werden. Ferner lässt sich die Bahnführungseinrichtung dadurch auf einfache Weise gegenüber dem Arbeitsraum kapseln.

Durch die Anordnung mindestens einer Schiebetüre an der Bahnführungseinrichtung lässt sich ein seitlicher Zugang für den Arbeitsraum bereitstellen, welcher eine große Öffnungsfläche hat. Die Bahnführungseinrichtung lässt sich als Verschiebungsführung oder Halter für eine Verschiebungsführung der Schiebetüre nutzen. Über den seitlichen Zugang sind beispielsweise Wartungsarbeiten und Reparaturarbeiten durchführbar.

Der Arbeitsraum lässt sich auf einfache Weise von der Bahnführungseinrichtung abkapseln, wenn an dem mindestens einen Werkstückschlitten und einem Endbereich der zugeordneten Bahnführungseinrichtung mindestens ein beweglicher Schieber angeordnet ist, welcher die Bahnführungseinrichtung gegenüber dem Arbeitsraum abdeckt. Der mindestens eine bewegliche Schieber ist beispielsweise faltenbalgartig oder als Lamelleneinrichtung, als Rollo oder Gliederschürze ausgebildet. Er ermöglicht eine Abdeckung der Bahnführungseinrichtung und damit Abkapselung von dem Arbeitsraum bei jeder Stellung des zugeordneten Werkstückschlittens.

Es ist insbesondere günstig, wenn die mindestens eine Schiebetüre parallel zu einer Verschiebungsrichtung des mindestens einen Werkstückschlittens verschieblich ist. Dadurch ergibt sich ein einfacher konstruktiver Aufbau und es lässt sich eine große Zugangsöffnung in den Arbeitsraum bei geöffneter Schiebetüre bereitstellen.

Ganz besonders vorteilhaft ist es, wenn die mindestens eine Schiebetüre einen Durchtauchraum begrenzt, durch welchen der entsprechende Werkstückschlitten durchtauchbar ist. Es kann dann bei der Verschiebungsbewegung des Werkstückschlittens in dem Arbeitsraum die Schiebetüre gewissermaßen durchtaucht werden; die Schiebetüre schließt eine relativ große Öffnung für den Arbeitsraumzugang. Ferner kann beim Öffnen die Schiebetüre über den Werkstückschlitten geführt werden. Dadurch ergibt sich auch ein einfacher konstruktiver Aufbau.

Günstig ist es, wenn die mindestens eine Schiebetüre zwischen einem Vorderende der Werkzeugmaschine und dem Maschinengestell angeordnet ist. Das Vorderende der Werkzeugmaschine ist dasjenige Ende, welches den Arbeitsraum nach vorne begrenzt bzw. zu welchem eine Werkzeugseite der mindestens einen Werkzeugträgereinrichtung weist. Durch diese Anordnung der mindestens einen Schiebetüre lässt sich eine große Öffnung für einen seitlichen Zugang in den Arbeitsraum beispielsweise für Wartungsarbeiten und Reparaturarbeiten bereitstellen.

Ganz besonders vorteilhaft ist es, wenn ein zurückgesetzter Bereich an einer Außenseite der Werkzeugmaschine vorgesehen ist, an welchem die mindestens eine Schiebetüre mindestens in geschlossener Stellung angeordnet ist. Über den zurückgesetzten Bereich lässt sich auf einfache Weise ein Zugang zu dem Arbeitsraum ermöglichen. Es lässt sich insbesondere eine Schiebetüre bereitstellen, welche in einem Teilbereich direkt den Arbeitsraum begrenzt und in weiteren Teilbereichen an der Bahnführungseinrichtung angeordnet ist.

Es kann vorgesehen sein, dass an der mindestens einen Schiebetüre mindestens ein Fenster und/oder mindestens eine Tür angeordnet ist. Insbesondere ist das mindestens eine Fenster und/oder die mindestens eine Tür an einem Teilbereich der mindestens einen Schiebetüre angeordnet, welcher direkt dem Arbeitsraum zugewandt ist, das heißt welcher an einer Innenseite den Arbeitsraum begrenzt. Dadurch ist über eine "kleine" Öffnung, deren Fläche kleiner ist als die Öffnung, welche durch die mindestens eine Schiebetüre geschlossen ist, ein direkter Zugang in den Arbeitsraum möglich, um beispielsweise den Arbeitsraum zu beobachten oder auch um "Handlungen" in dem Arbeitsraum vorzunehmen, ohne dass die gesamte Schiebetüre geöffnet werden muss.

Insbesondere ist die mindestens eine Tür, welche an der Schiebetüre angeordnet ist, selber eine Schiebetüre oder Schwenktüre. Sie kann dadurch auf einfache Weise geöffnet werden.

Es ist dann vorteilhaft, wenn die mindestens eine Tür einen Öffnungsbereich aufweist, welcher an der zugeordneten Schiebetüre liegt und insbesondere nicht außerhalb der Schiebetüre liegt. Dies wiederum ermöglicht auf einfache Weise die Verschieblichkeit der an der Bahnführungseinrichtung angeordneten Schiebetüre.

Es ist günstig, wenn die mindestens eine Schiebetüre ein erstes Türelement aufweist, welches die Bahnführungseinrichtung zum Außenraum hin abdeckt. Dieses erste Türelement ist insbesondere mindestens näherungsweise parallel zu einer bezogen auf die Schwerkraftrichtung vertikalen Richtung ausgerichtet. Es lässt sich dadurch eine Außenseite der Bahnführungseinrichtung im Bereich der durch die mindestens eine Schiebetüre abgedeckten Öffnung in einer Arbeitsraumverkleidung oder Außenverkleidung nach außen abdecken.

Die Bahnführungseinrichtung liegt dann zwischen dem Arbeitsraum und dem ersten Türelement, so dass das erste Türelement die Bahnführungseinrichtung zum Außenraum hin abdecken kann.

Es ist ferner günstig, wenn die mindestens eine Schiebetüre ein zweites Türelement aufweist, welches an dem ersten Türelement angeordnet ist und quer zu diesem orientiert ist und die Bahnführungseinrichtung zum Außenraum hin bezogen auf die Schwerkraftrichtung nach oben abdeckt. Das zweite Türelement ist vorzugsweise mindestens näherungsweise horizontal ausgerichtet (bezogen auf die Schwerkraftrichtung). Es deckt die Bahnführungseinrichtung bezogen auf die Schwerkraftrichtung nach oben an der Zugangsöffnung zum Arbeitsraum ab. Es ist (bei geschlossener mindestens einer Schiebetüre) insbesondere in einem zurückgesetzten Bereich an einer Außenverkleidung der Werkzeugmaschine angeordnet.

Das erste Türelement liegt vorzugsweise zwischen der Bahnführungseinrichtung und einem Deckenbereich eines gegen den Außenraum zurückgesetzten Bereichs der Werkzeugmaschine. Es lässt sich dadurch eine "Tunnelöffnung" für den Zugang zum Arbeitsraum von dem Außenraum her bereitstellen, wobei die Bahnführungseinrichtung sich von dem Arbeitsraum auf einfache Weise abkapseln lässt und sich die Bahnführungseinrichtung über eine Außenverkleidung von dem Außenraum abkapseln lässt.

Es ist ferner günstig, wenn die mindestens eine Schiebetüre ein drittes Türelement aufweist, welches an dem zweiten Türelement angeordnet ist und quer zu diesem orientiert ist. Das dritte Türelement begrenzt insbesondere den Arbeitsraum direkt.

Es ist vorteilhaft, wenn das dritte Türelement bis zu einem Deckenbereich der Arbeitsraumverkleidung reicht. Dadurch lässt sich die Zugangsöffnung zu einem Arbeitsraum bei geschlossener mindestens einer Schiebetüre in einem bezogen auf die Schwerkraftrichtung oberen Bereich schließen.

Die Werkzeugmaschine lässt sich auf konstruktiv einfache Weise ausbilden, wenn das dritte Türelement mindestens näherungsweise parallel zum ersten Türelement orientiert ist (und beabstandet zu diesem ist). Dadurch lässt sich das dritte Türelement auf einfache Weise an einer Verschiebungsführung führen und beispielsweise in einen Zwischenraum an der Werkzeugmaschine eintauchen, wenn die mindestens eine Schiebetüre geöffnet ist.

Günstig ist es, wenn an dem dritten Türelement mindestens ein Fenster und/oder mindestens eine Tür angeordnet ist. Dadurch lässt sich über eine "kleine" Öffnung (im Vergleich zu der Zugangsöffnung zum Arbeitsraum, welche über die mindestens eine Schiebetüre geöffnet bzw. geschlossen werden kann) auf den Arbeitsraum zugreifen bzw. der Arbeitsraum lässt sich von dem dritten Türelement aus beobachten.

Das dritte Türelement begrenzt insbesondere den Arbeitsraum, das heißt es weist eine Innenseite auf, welche den Arbeitsraum direkt begrenzt, und eine Außenseite, welche zum Außenraum weist.

Ganz besonders vorteilhaft ist es, wenn die mindestens eine Schiebetüre an der Bahnführungseinrichtung verschieblich gehalten ist. Die Bahnführungseinrichtung ist ein Halter für die Verschiebungsführung der mindestens einen Schiebetüre. Dadurch ergibt sich ein einfacher konstruktiver Aufbau.

Insbesondere ist der mindestens eine Schieber zwischen dem Arbeitsraum und einem Teilbereich der mindestens einen Schiebetüre angeordnet. Die Reihenfolge ausgehend von dem Arbeitsraum seitlich nach außen weisend (in einer x-Richtung) ist dann Arbeitsraum, Schieber, Schiebetüre.

Ganz besonders vorteilhaft ist es, wenn eine Fixierungseinrichtung zur Fixierung des mindestens einen Schiebers an dem zugeordneten Werkstückschlitten und/oder dem Endbereich der zugeordneten Bahnführungseinrichtung so ausgebildet ist, dass die Fixierung von dem Außenraum her bei geöffneter mindestens einer Schiebetüre lösbar ist. Der mindestens eine Schieber kann dadurch mindestens an einer Seite gelöst werden und so verschoben werden, dass ein Zugang über die Zugangsöffnung auch im Bereich des Schiebers möglich ist. Die Zugangsöffnung lässt sich dadurch vergrößern.

Es ist ferner vorteilhaft, wenn die mindestens eine Schiebetüre beim Öffnen in einen Bereich hinter eine Außenverkleidung der Werkzeugmaschine eintauchbar ist. Dadurch lässt sich eine "versenkte" Schiebeführung realisieren. Der Bereich oberhalb der Bahnführungseinrichtung muss sowieso gegenüber dem Arbeitsraum gekapselt werden. Dieser Zwischenraum lässt sich als Aufenthaltsraum für die Schiebetüre, wenn diese geöffnet ist, nutzen.

Insbesondere ist die Bahnführungseinrichtung zwischen einem Bereich der Arbeitsraumverkleidung und einer Außenverkleidung der Werkzeugmaschine angeordnet. Der erwähnte Bereich der Arbeitsraumverkleidung dient zur Kapselung des Arbeitsraums zu der Bahnführungseinrichtung hin. Die Außenverkleidung dient zur Verkapselung der Werkzeugmaschine gegenüber dem Außenraum. Die Bahnführungseinrichtung ist dazwischen angeordnet, so dass sie einerseits gegenüber dem Arbeitsraum gekapselt ist und andererseits gegenüber dem Außenraum gekapselt ist.

Es ist günstig, wenn die mindestens eine Schiebetüre beim Öffnen in einen Zwischenraum zwischen einem Arbeitsraumverkleidungsbereich und der Außenverkleidung eintauchbar ist. Dadurch ergibt sich eine optimale Platznutzung, wobei sich eine entsprechende Verschiebungsführung der mindestens einen Schiebetüre auf einfache Weise ausbilden lässt.

Es ist ferner günstig, wenn eine Führungseinrichtung zur Schiebeführung der mindestens einen Schiebetüre vorgesehen ist, um auf einfache Weise ein Öffnen und Schließen zu ermöglichen. Diese Führungseinrichtung umfasst insbesondere Elemente wie Führungsleisten, die in einem Deckenbereich der Werkzeugmaschine und an einer Abdeckungsführungseinrichtung (Schieberführung) und Bahnführungseinrichtung angeordnet sind.

Die Werkzeugmaschine lässt sich auf konstruktiv einfache Weise realisieren, wenn die Führungseinrichtung mindestens teilweise an der zugeordneten Bahnführungseinrichtung angeordnet oder ausgebildet ist. Elemente der Bahnführungseinrichtung dienen auch als Führungselemente oder zumindest als Halter für Führungselemente der Führungseinrichtung zur Schiebeführung der mindestens einen Schiebetüre.

Beispielsweise ist mindestens eine Führungsleiste für die mindestens eine Schiebetüre vorhanden, welche an einer Führungsleiste für mindestens einen Schieber (zur Kapselung der Bahnführungseinrichtung von dem Arbeitsraum) angeordnet oder ausgebildet ist. Der mindestens eine Schieber ist dabei mit dem mindestens einen Werkstückschlitten verbunden.

Es ist günstig, wenn mindestens eine Führungsleiste für die mindestens eine Schiebetüre vorhanden ist, welche an oder in der Nähe einer Außenseite der Bahnführungseinrichtung des mindestens einen Werkstückschlittens angeordnet ist. Dadurch lässt sich die mindestens eine Schiebetüre auf einfache Weise an der Bahnführungseinrichtung positionieren und verschieben.

Bei einer Ausführungsform umfasst die erfindungsgemäße Werkzeugmaschine einen ersten Werkstückschlitten, welcher an einer ersten Bahnführungseinrichtung verschieblich ist, und einen zweiten Werkstückschlitten, welcher an einer zweiten Bahnführungseinrichtung verschieblich ist, wobei der Arbeitsraum zwischen der ersten Bahnführungseinrichtung und der zweiten Bahnführungseinrichtung liegt. Bei einer solchen Werkzeugmaschine können beispielsweise zwei zu bearbeitende Werkstücke dem Arbeitsraum bereitgestellt werden. Es ist beispielsweise auch möglich, ein noch zu bearbeitendes Werkstück außerhalb des Arbeitsraums bereitzuhalten, während ein anderes Werkstück, welches auf einem entsprechenden Werkstückschlitten geführt ist, in dem Arbeitsraum bearbeitet wird. Es ist ferner möglich, den ersten Werkstückschlitten und den zweiten Werkstückschlitten miteinander zu verklemmen, um beispielsweise größere Werkstücke bearbeiten zu können.

Insbesondere sind eine Verschiebungsrichtung des ersten Werkstückschlittens und eine Verschiebungsrichtung des zweiten Werkstückschlittens parallel zueinander.

Es kann eine Verbindungseinrichtung zur Klemmung des ersten Werkstückschlittens und des zweiten Werkstückschlittens vorgesehen sein.

Es ist ferner günstig, wenn dem ersten Werkstückschlitten ein eigener erster Antrieb und dem zweiten Werkstückschlitten ein eigener zweiter Antrieb zugeordnet ist. Durch eine Steuerungseinrichtung sind dann die Werkstückschlitten individuell ansteuerbar. Es ist auch möglich, dass die beiden Antriebe synchronisierbar sind, um beispielsweise eine geklemmte Werkstückschlitten-Kombination zu bewegen. Durch die Zuordnung eines eigenen Antriebs zu dem jeweiligen Werkstückschlitten mit individueller Ansteuerbarkeit ist es beispielsweise möglich, eine hauptzeitparallele Werkstückbeladung/Werkstückentladung durchzuführen. Während ein Werkstück, welches an dem einen Werkstückschlitten gehalten ist, in dem Arbeitsraum bearbeitet wird, lässt sich ein bereits bearbeitetes Werkstück außerhalb des Arbeitsraums an einem Ladeplatz abholen und ein neues zu bearbeitendes Werkstück zu dem anderen Werkstückträger zuführen und an diesem fixieren, welches dann an dem Ladeplatz in Wartestellung gehalten wird. Der Werkstückwechsel erfolgt dann parallel zu der Bearbeitung eines anderen Werkstücks in dem Arbeitsraum.

Günstigerweise ist die mindestens eine Werkzeugträgereinrichtung mindestens in einer ersten Richtung und in einer senkrecht zur ersten Richtung liegenden zweiten Richtung am Maschinengestell verschieblich. Es ist möglich, dass die Werkzeugträgereinrichtung auch noch in einer dritten, senkrecht zu der ersten Richtung und senkrecht zu der zweiten Richtung liegenden Richtung verschieblich ist.

Beispielsweise ist das Maschinengestell, welches insbesondere ständerartig oder portalartig ausgebildet ist, an einem Maschinenbett angeordnet. Über das Maschinenbett ist die Werkzeugmaschine auf einer Unterlage aufgestellt.

Es ist dann ferner günstig, wenn die mindestens eine Bahnführungseinrichtung an dem Maschinenbett angeordnet ist. Das Maschinenbett bildet die "Unterlage" zur Positionierung und Fixierung der mindestens einen Bahnführungseinrichtung.

Es ist ferner günstig, wenn ein Werkstückträger an dem zugeordneten mindestens einen Werkstückschlitten angeordnet ist, welcher um eine Drehachse drehbar ist. Dadurch ergeben sich zusätzliche Bearbeitungsmöglichkeiten aufgrund zusätzlicher Orientierungs- und Positionierungsmöglichkeiten eines Werkstücks relativ zu einem Werkzeug der Werkzeugträgereinrichtung.

Die Drehachse liegt vorzugsweise quer und insbesondere senkrecht zu einer Verschiebungsrichtung des mindestens einen Werkstückschlittens. Es ergibt sich dadurch ein einfacher konstruktiver Aufbau. Insbesondere lässt sich auf einfache Weise ein entsprechender Antrieb für die Drehbewegung an dem zugeordneten Werkstückschlitten anordnen.

Die nachfolgende Beschreibung bevorzugter Ausführungsformen dient im Zusammenhang mit den Zeichnungen der näheren Erläuterung der Erfindung. Es zeigen:
- Figur 1: eine perspektivische Darstellung eines Ausführungsbeispiels einer erfindungsgemäßen Werkzeugmaschine;
- Figur 2: eine Teilansicht eines Arbeitsraumbereichs der Werkzeug- maschine gemäß Figur 1;
- Figur 3: die gleiche Ansicht wie Figur 2 mit teilweise abgenommener Außenverkleidung;
- Figur 4: eine Seitenansicht auf den Teilbereich gemäß Figur 3;
- Figur 5: eine ähnliche Ansicht mit Figur 3, wobei weitere Teile der Außen- verkleidung und Teile der Arbeitsraumverkleidung abgenommen sind;
- Figur 6: eine Seitenansicht auf den Teilbereich gemäß Figur 5; und
- Figur 7: eine Vorderansicht des Teilbereichs gemäß Figur 2.

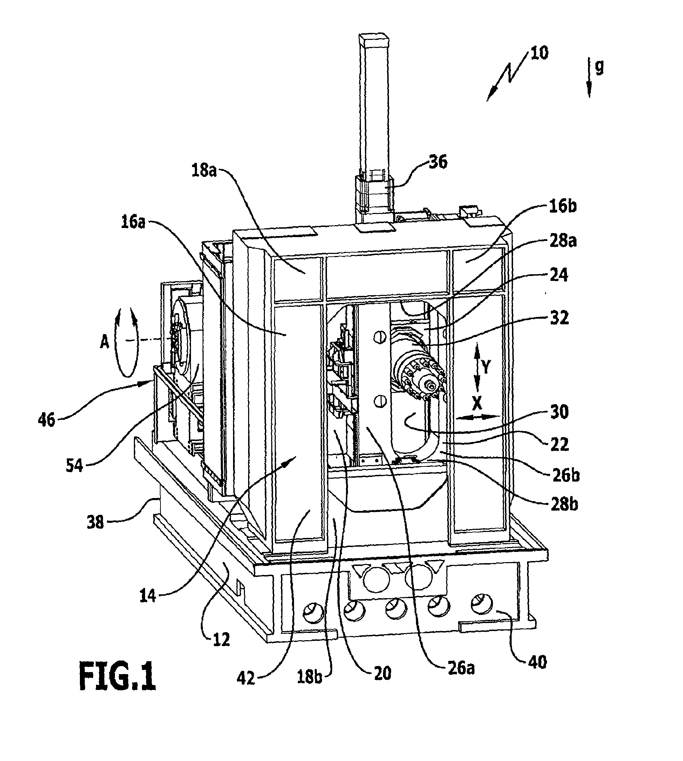

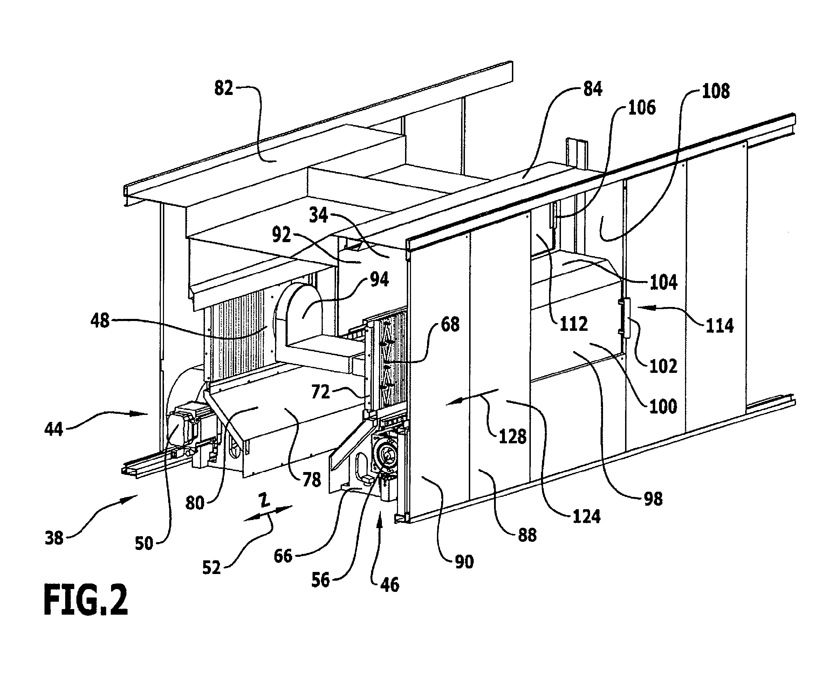

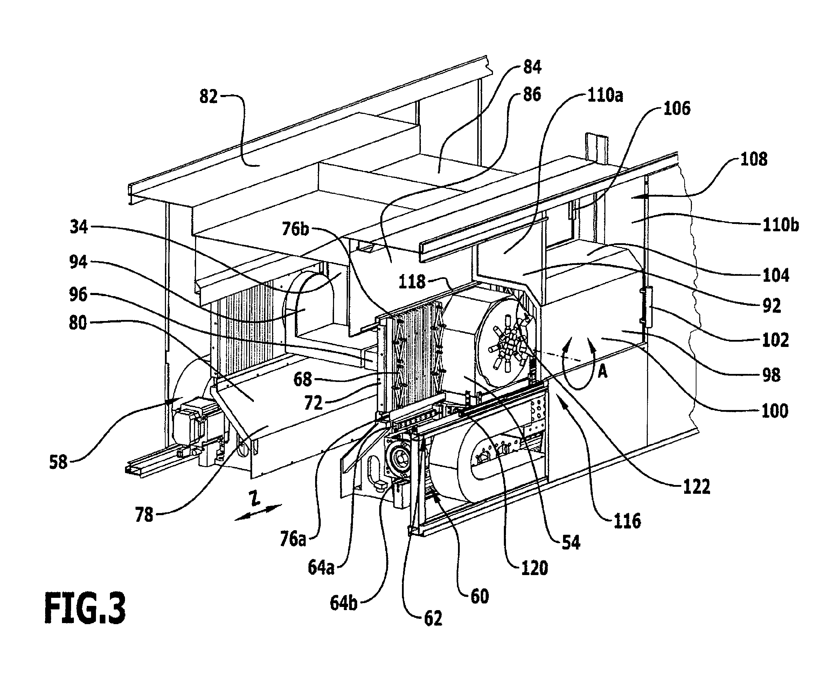

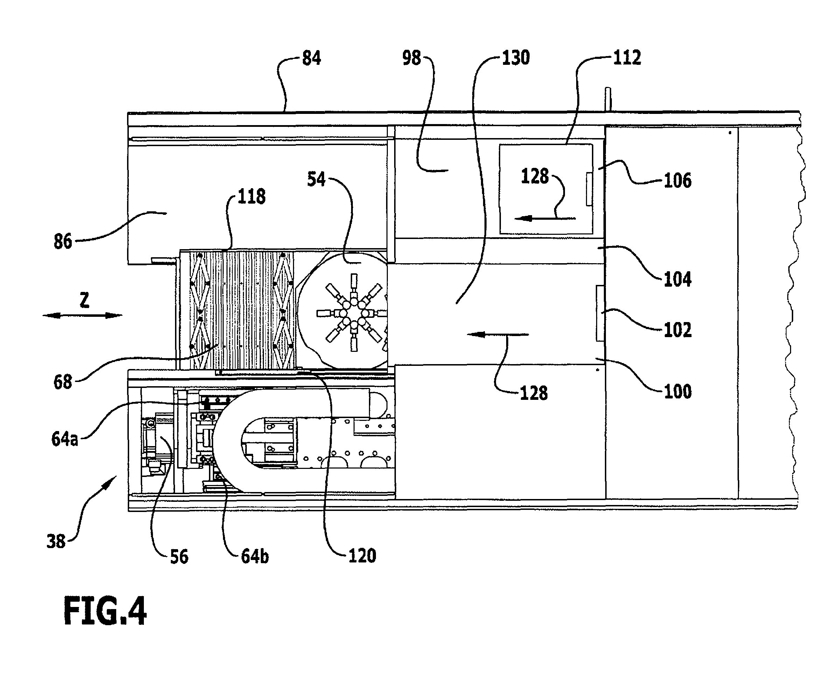

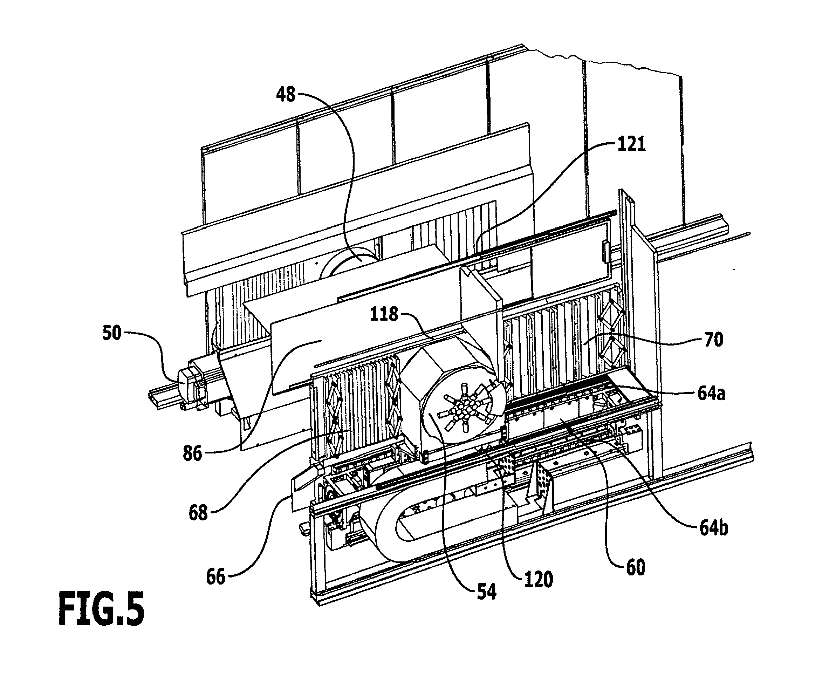

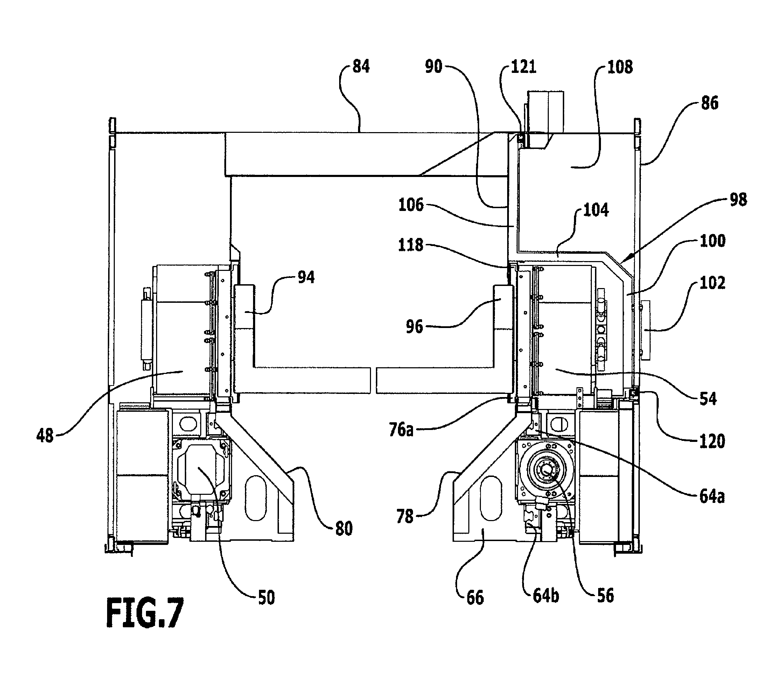

Ein Ausführungsbeispiel einer erfindungsgemäßen Werkzeugmaschine, welche in Figur 1 gezeigt und dort mit 10 bezeichnet ist und welche in Teildarstellungen in den Figuren 2 bis 7 gezeigt ist, umfasst ein Maschinenbett 12. Das Maschinenbett 12 hat eine im Wesentlichen quaderförmige Hüllfläche. Über das Maschinenbett 12 ist die Werkzeugmaschine 10 auf einer Unterlage aufgestellt.

An dem Maschinenbett 12 ist ein Maschinengestell 14 angeordnet, welches in Form eines Ständers oder Portals ausgebildet ist. Das Maschinengestell 14 weist beabstandete Schenkel 16a, 16b auf, welche parallel zueinander orientiert sind und insbesondere in vertikaler Richtung (parallel zur Schwerkraftrichtung) orientiert sind. Die Schenkel 16a, 16b sind durch einen oberen Verbindungssteg 18a und durch einen unteren Verbindungssteg 18b verbunden. Der untere Verbindungssteg 18b ist dem Maschinenbett 12 zugewandt bzw. an diesem fixiert.

Zwischen den Schenkeln 16a und 16b sowie den Verbindungsstegen 18a und 18b ist eine durchgehende Öffnung 20 gebildet. In dieser Öffnung 20 ist ein (Werkzeugträger-)Schlitten 22 (erster Schlitten 22) geführt. Es ist dabei eine erste Führungseinrichtung an dem oberen Verbindungssteg 18a und eine zweite Führungseinrichtung an dem unteren Verbindungssteg 18b angeordnet. Das Maschinengestell 14 bildet einen Schlittenträger für den ersten Schlitten 22. Dieser ist an dem Maschinengestell 14 in einer Richtung/Gegenrichtung x beweglich. Diese x-Richtung ist vorzugsweise eine horizontale Richtung bezogen auf die Schwerkraftrichtung.

Der erste Schlitten 22 ist durch einen Antrieb in seiner Verschiebungsbewegung angetrieben. Bei diesem Antrieb kann es sich beispielsweise um einen Kugelgewindeantrieb oder Linearmotorantrieb handeln.

An dem ersten Schlitten 22 ist ein zweiter Schlitten 24 verschieblich geführt. Eine Verschiebungsrichtung des zweiten Schlittens 24 an dem ersten Schlitten 22, welcher dadurch einen Schlittenträger für den zweiten Schlitten 24 bildet, ist senkrecht zur x-Richtung. Die entsprechende y-Richtung ist eine bezogen auf die Schwerkraftrichtung vertikale Richtung.

Der erste Schlitten 22 ist jochartig ausgebildet mit einem ersten Schenkel 26a und einem beabstandeten zweiten Schenkel 26b. Der erste Schenkel 26a und der zweite Schenkel 26b sind parallel zueinander ausgerichtet und dabei in vertikaler Richtung orientiert. Sie sind jeweils durch einen oberen Verbindungssteg 28a und einen unteren Verbindungssteg 28b miteinander verbunden.

Zwischen dem ersten Schenkel 26a und dem zweiten Schenkel 26b sowie dem oberen Verbindungssteg 28a und dem unteren Verbindungssteg 28b ist eine durchgehende Öffnung 30 gebildet. Durch diese Öffnung 30 ist ein Teilbereich einer Werkzeugträgereinrichtung 32 durchgetaucht. Die Werkzeugträgereinrichtung 32 ist insbesondere als Werkzeugspindel ausgebildet, welche ein oder mehrere insbesondere rotierbare Werkzeuge hält, wobei über ein Werkzeug in einem Arbeitsraum 34 Werkstücke bearbeitbar sind.

Der zweite Schlitten 24 ist in seiner Verschiebungsbewegung in der y-Richtung durch einen Antrieb 36 angetrieben. Bei dem Antrieb 36 handelt es sich beispielsweise um einen Kugelgewindeantrieb oder um einen Linearmotorantrieb.

Es ist grundsätzlich möglich, dass an dem Maschinengestell 14 mehrere Werkzeugträgereinrichtungen (entsprechend der Werkzeugträgereinrichtung 32) angeordnet sind. Diese können dabei an dem gleichen ersten Schlitten 22 und/oder zweiten Schlitten 24 angeordnet sein oder es können pro Werkzeugträgereinrichtung getrennte Schlitteneinrichtungen (mit erstem Schlitten 22 und zweitem Schlitten 24) vorgesehen sein.

Es ist grundsätzlich auch möglich, dass an dem zweiten Schlitten 24 ein Schlitten für eine z-Beweglichkeit der Werkzeugträgereinrichtung 32 angeordnet ist. Die z-Richtung liegt dabei senkrecht zur x-Richtung und senkrecht zur y-Richtung.

Ein Maschinenaufbau, bei dem die Werkzeugträgereinrichtung an einem Schlitten (dem zweiten Schlitten 24) gehalten ist, welche insbesondere jochförmig ausgebildet ist, wobei der Schlittenträger selber ein Schlitten ist (der erste Schlitten 22), welcher verschieblich ist, wird auch als Box-in-Box-Konzept bezeichnet. Dieses ist in der EP 0 614 724 B1 beschrieben, auf die ausdrücklich Bezug genommen wird.

Die Werkzeugmaschine 10 weist ein Vorderende 38 und ein Hinterende 40 auf. Das Maschinengestell ist sowohl beabstandet zum Vorderende 38 als auch beabstandet zum Hinterende 40 an dem Maschinenbett 12 angeordnet. Zwischen dem Maschinengestell 14 und dem Hinterende 40 kann an dem Maschinengestell 14 eine Verkleidung 42 angeordnet sein. Eine Steuerungseinrichtung für die Werkzeugmaschine 10 kann in diesem Bereich angeordnet sein.

Der Arbeitsraum 34 liegt zwischen dem Vorderende 38 und dem Maschinengestell 14.

Die Werkzeugmaschine 10 umfasst eine erste Werkstückträgereinrichtung 44 und eine zweite Werkstückträgereinrichtung 46. Die erste Werkstückträgereinrichtung 44 weist einen ersten Werkstückschlitten 48 auf, welchem ein eigener erster Antrieb 50 zugeordnet ist. Der erste Antrieb 50 ist dabei beispielsweise ein Kugelgewindeantrieb oder ein Linearmotorantrieb.

Über den ersten Antrieb 50 ist der erste Werkstückschlitten 48 in einer Verschiebungsrichtung 52 verschieblich. Diese Verschiebungsrichtung 52 (z-Richtung) liegt senkrecht zur x-Richtung und zur y-Richtung. Der erste Werkstückschlitten 48 und damit ein an ihm gehaltenes Werkstück ist in der z-Richtung relativ zum Maschinengestell 14 verschieblich.

Die zweite Werkstückträgereinrichtung 46 weist entsprechend einen zweiten Werkstückschütten 54 auf, dem ein eigener zweiter Antrieb 56 zugeordnet ist. Der zweite Antrieb 56 ist beispielsweise ein Kugelgewindeantrieb oder ein Linearmotorantrieb. Die Verschiebungsrichtung des zweiten Werkstückschlittens 54 ist parallel zur Verschiebungsrichtung 52 und damit ebenfalls eine z-Richtung.

Die erste Werkstückträgereinrichtung 44 und die zweite Werkstückträgereinrichtung 46 sind in der x-Richtung beabstandet zueinander. Der Arbeitsraum 34 liegt zwischen der ersten Werkstückträgereinrichtung 44 und der zweiten Werkstückträgereinrichtung 46.

Es ist grundsätzlich vorgesehen, dass der erste Werkstückschlitten 48 und der zweite Werkstückschlitten 54 getrennt verfahrbar sind. Es kann aber auch vorgesehen sein, dass der erste Werkstückschlitten 48 und der zweite Werkstückschlitten 54 über eine Verbindungseinrichtung miteinander fest verbunden oder geklemmt sind und so eine Kombination aus dem ersten Werkstückschlitten 48 und dem zweiten Werkstückschlitten 54 als Ganzes verschieblich ist. Dazu müssen dann der erste Antrieb 50 und der zweite Antrieb 56 entsprechend über eine Steuerungseinrichtung synchronisiert werden.

Es ist grundsätzlich auch möglich, dass für die Kombination aus erstem Werkstückschlitten 48 und zweitem Werkstückschlitten 54 nur ein gemeinsamer Antrieb vorgesehen ist. In diesem Falle kann der erste Werkstückschlitten 48 auch als erster Teil eines Gesamtschlittens und der zweite Werkstückschlitten als zweiter Teil eines Gesamtschlittens angesehen werden.

Der erste Werkstückschlitten 48 ist an einer als Ganzes mit 58 bezeichneten ersten Bahnführungseinrichtung verschieblich geführt. Entsprechend ist der zweite Werkstückschlitten 54 an einer zweiten Bahnführungseinrichtung 60 verschieblich geführt. Die erste Bahnführungseinrichtung 58 und die zweite Bahnführungseinrichtung 60 sind vorzugsweise im Wesentlichen parallel zueinander orientiert und reichen von dem Vorderende 38 oder von einem Bereich in der Nähe des Vorderendes 38 zu dem Maschinengestell 14.

Die erste Bahnführungseinrichtung 58 und die zweite Bahnführungseinrichtung 60 sind an dem Maschinenbett 12 angeordnet.

Die Bahnführungseinrichtungen 58 und 60 umfassen jeweils eine Führungseinrichtung 62, an welcher der entsprechende Werkstückschlitten (48 oder 54) geführt ist. Dazu weist die Führungseinrichtung 62 beispielsweise eine erste Führungsleiste 64a und eine vertikal beabstandete zweite Führungsleiste 64b auf. Die Führungsleisten 64a und 64b sind parallel zueinander in z-Richtung orientiert. Sie werden an dem Maschinenbett 12 durch entsprechende Stützelemente 66 usw. gehalten.

Die erste Bahnführungseinrichtung 58 und die zweite Bahnführungseinrichtung 60 begrenzen den Arbeitsraum 34 seitlich auf gegenüberliegenden Seiten.

An den jeweiligen Werkstückschlitten 48 bzw. 54 sind auf gegenüberliegenden Seiten ein erster Schieber 68 und ein zweiter Schieber 70 fixiert. Ein Schieber ist (in einem Teilbereich) mit dem zugeordneten Werkstückschlitten verschieblich; er bildet eine Abdeckung. Der erste Schieber 68 ist dabei ferner an einem Endbereich 72 der zugeordneten Bahnführungseinrichtung 58, 60 an oder in der Nähe des Vorderendes 38 fixiert. Der zweite Schieber 70 ist an einer gegenüberliegenden Seite des entsprechenden Werkstückschlittens und einem Endbereich 74 der entsprechenden Bahnführungseinrichtung, welcher dem Maschinengestell 14 zuweist, fixiert. Der erste Schieber 68 und der zweite Schieber 70 sind beispielsweise faltenbalgartig ausgebildet. Sie können beispielsweise auch als Lamelleneinrichtung, Rollo oder Gliederschürze ausgebildet sein. Sie bilden Abdeckungen für den Arbeitsraum zu der ersten Bahnführungseinrichtung 58 und der zweiten Bahnführungseinrichtung 60 hin. Sie sind an den entsprechenden Werkstückschlitten 48 bzw. 54 gekoppelt, so dass bei jeder Verschiebungsstellung des entsprechenden Werkstückschlittens die Bahnführungseinrichtung 58 bzw. 60 gegenüber dem Arbeitsraum 34 gekapselt ist.

Wenn der entsprechende Werkstückschlitten in Richtung des Vorderendes 38 fährt, dann wird der erste Schieber 68 zusammen geschoben und der zweite Schieber 70 auseinander gezogen. Bei der Verschiebungsbewegung in die Gegenrichtung (auf das Hinterende 40 zu) wird der zweite Schieber 70 zusammengezogen und der erste Schieber 68 wird auseinander gezogen.

Der erste Schieber 68 und der zweite Schieber 70 sind an einer untere Führungsleiste 76a und einer oberen Führungsleiste 76b geführt. Die untere Führungsleiste 76a ist an oder in der Nähe der ersten Führungsleiste 64a der Führungseinrichtung 62 ausgebildet. Die obere Führungsleiste 76b ist vertikal beabstandet zu der unteren Führungsleiste 76a. Der Abstand zwischen der unteren Führungsleiste 76a und der oberen Führungsleiste 76b entspricht im Wesentlichen der Höhe des entsprechenden Werkstückschlittens 48 bzw. 54 über seiner Führungseinrichtung 62.

Zwischen dem ersten Schieber 68 und dem zweiten Schieber 70 und insbesondere zwischen der unteren Führungsleiste 76a und dem Maschinenbett 12 ist jeweils eine Abdeckung 78 angeordnet, welche die Bahnführungseinrichtung 58 bzw. 60 unterhalb der Führungseinrichtung 62 insbesondere im Bereich von Antriebselementen bezüglich des Arbeitsraums 34 abdeckt. Die jeweilige Abdeckung 78 weist dabei eine Schrägfläche 80 auf, welche längs der z-Richtung orientiert ist und in einem spitzen Winkel zu der x-Richtung geneigt ist. Bearbeitungsabfälle und insbesondere Späne können dadurch an der Schrägfläche 80 nach unten rutschen und über eine Späneentsorgungseinrichtung, welche insbesondere am Maschinenbett 12 angeordnet ist, abgeführt werden.

Die Abdeckung 78, welche der ersten Bahnführungseinrichtung 58 zugeordnet ist und die entsprechende Abdeckung, welche der zweiten Bahnführungseinrichtung 60 zugeordnet ist, sind dabei beabstandet zueinander.

Die Werkzeugmaschine 10 weist eine Arbeitsraumverkleidung 82 auf. Diese ist in Figur 1 nicht gezeigt. Durch die Arbeitsraumverkleidung ist der Arbeitsraum 34 gegenüber dem Außenraum und Komponenten der Werkzeugmaschine gekapselt. Die Arbeitsraumverkleidung 82 weist dabei einen Deckenbereich 84 auf, welche den Arbeitsraum nach oben (bezogen auf die Schwerkraftrichtung) schließt.

Zwischen dem Deckenbereich 84 und den Schiebern 68 und 70 und insbesondere zwischen dem Deckenbereich 84 und der Leiste 76b ist ein Arbeitsraumverkleidungsbereich 86 angeordnet, welcher die entsprechenden Bahnführungseinrichtungen 58 bzw. 60 vor dem Eindringen von Bearbeitungsabfällen und dergleichen von oben her schützt. Der Arbeitsraumverkleidungsbereich 86 ist insbesondere durch ein oder mehrere Verkleidungspaneele gebildet, welche an dem Deckenbereich 84 fixiert sind und an der oberen Führungsleiste 76b fixiert sind.

Die Werkzeugmaschine 10 weist ferner eine Außenverkleidung 88 auf (Figur 2). Die Außenverkleidung 88 kann dabei teilweise mit der Arbeitraumverkleidung 82 zusammenfallen. Insbesondere bildet der Deckenbereich 84 der Arbeitsraumverkleidung 82 eine Außenverkleidung.

Im Bereich der Bahnführungseinrichtungen 58 und 60 ist ein Außenverkleidungsbereich 90 vorhanden, welcher beabstandet zu dem Arbeitsraumverkleidungsbereich 86 ist und insbesondere parallel beabstandet zu diesem ist. Über diesen Außenverkleidungsbereich 90 ist die entsprechende Bahnführungseinrichtung 58 und 60 gegenüber dem Außenraum gekapselt. Der entsprechende Außenverkleidungsbereich 90 erstreckt sich dabei vorzugsweise von dem Maschinenbett 12 bis zu dem Deckenbereich 84.

Zwischen dem Außenverkleidungsbereich 90 und dem Arbeitsraumverkleidungsbereich 86 ist ein Zwischenraum 92 (Zwischenbereich) angeordnet, in welchem wiederum die entsprechende Bahnführungseinrichtung 58 bzw. 60 mindestens teilweise angeordnet ist.

Der erste Werkstückschlitten 48 und der zweite Werkstückschlitten 54 trägt jeweils einen ersten Werkstückträger 94 und einen zweiten Werkstückträger 96. An diesem sind jeweils ein oder mehrere Werkstücke fixierbar. Der erste Werkstückträger 94 und der zweite Werkstückträger 96 sind dabei an dem zugeordneten ersten Werkstückschlitten 48 bzw. zweiten Werkstückschlitten 54 um eine Achse A drehbar. Dazu sitzt an dem ersten Werkstückschlitten 48 und an dem zweiten Werkstückschlitten 54 ein entsprechender Drehantrieb.

Die Achse A ist quer und insbesondere senkrecht zur z-Richtung (Verschiebungsrichtung der Werkstückschlitten 48 und 54) ausgerichtet und parallel zur x-Richtung.

Die Drehachse A ist eine horizontale Achse.

Wenn der erste Werkstückschlitten 48 und der zweite Werkstückschlitten 54 geklemmt sind, dann sind auch entsprechend der erste Werkstückträger 94 und der zweite Werkstückträger 96 geklemmt. Diese lassen sich dann um die gemeinsame Drehachse A rotieren. In diesem Sinne kann dann der erste Werkstückträger 94 und der zweite Werkstückträger 96 als ein gemeinsamer (einziger) Werkstückträger aufgefasst werden, an dem beispielsweise ein großes Werkstück oder mehrere Werkstücke fixiert werden können.

Für den seitlichen Zugang zum Arbeitsraum 34 ist (mindestens) eine Schiebetüre 98 vorgesehen. Diese Schiebetüre 98 liegt zwischen dem Vorderende 38 und dem Maschinengestell 14. Werkstücke werden in den Arbeitsraum 34 vom Vorderende 38 her eingebracht und vom Vorderende her entnommen. Es kann dabei eine Frontbeladung oder Topbeladung vorgesehen sein, wobei die entsprechenden Ladeöffnungen aber im Bereich des Vorderendes 38 angeordnet sind. Die Schiebetüre 98 dient zum seitlichen Zugang zum Arbeitsraum, um beispielsweise Reparaturarbeiten und Wartungsarbeiten durchführen zu können.

Die Schiebetüre 98 ist an einer Bahnführungseinrichtung angeordnet. Bei dem gezeigten Ausführungsbeispiel ist die Schiebetüre 98 an der zweiten Bahnführungseinrichtung 60 angeordnet.

Die Schiebetüre 98 umfasst ein erstes Türelement 100, welches im Wesentlichen parallel zu dem Außenverkleidungsbereich 90 orientiert ist. An dem ersten Türelement 100 ist beispielsweise ein Türgriff 102 angeordnet.

An dem ersten Türelement 100 ist ein zweites Türelement 104 angeordnet und mit diesem fest verbunden, welches quer zu diesem orientiert ist. Das zweite Türelement 104 ist beispielsweise senkrecht zu dem ersten Türelement 100 orientiert. Es kann dabei ein Übergangsbereich vorgesehen sein.

Das erste Türelement 100 dient zur Abdeckung der Bahnführungseinrichtung 60 zu dem Außenraum hin, und zwar in einer seitlichen Richtung. Das zweite Türelement 104 dient zur Abdeckung der zweiten Bahnführungseinrichtung 60 nach oben.

An dem zweiten Türelement 104 ist ein drittes Türelement 106 angeordnet, welches quer zu dem zweiten Türelement 104 orientiert ist und insbesondere im Wesentlichen parallel zum ersten Türelement 100 orientiert ist. Das dritte Türelement 106 ist beabstandet zu dem ersten Türelement 100. Die Kombination aus erstem Türelement 100, zweitem Türelement 104 und drittem Türelement 106 hat im Querschnitt beispielsweise eine mindestens näherungsweise Z-förmige Gestalt oder die Gestalt eines Doppel-L.

Das dritte Türelement 106 begrenzt den Arbeitsraum 34; das dritte Türelement 106 hat eine Innenseite, welche eine Begrenzungswand des Arbeitsraums 34 ist. Eine gegenüberliegende Außenseite weist in den Außenraum.

An der Außenverkleidung 88 ist im Bereich der geschlossenen Schiebetüre 98 ein zurückgesetzter Bereich 108 gebildet. Dieser zurückgesetzte Bereich ist so ausgebildet, dass ein Zugang von dem Außenraum in den Arbeitsraum 34 möglich ist.

Der zurückgesetzte Bereich 108 ist bezogen auf die z-Richtung begrenzt durch beabstandete gegenüberliegende Bereiche 110a, 110b der Außenverkleidung 88. Diese Bereiche 110a und 110b sind quer und insbesondere senkrecht zu dem Außenverkleidungsbereich 90 orientiert. Die Bereiche 110a und 110b sind durch ein oder mehrere entsprechende Paneele gebildet.

Nach oben ist der zurückgesetzte Bereich 108 durch den Deckenbereich 84 der Arbeitsraumverkleidung 82 begrenzt.

An dem dritten Türelement 106 ist eine Türe wie eine Schiebetüre 112 angeordnet, welche einen direkten Zugang in den Arbeitsraum 34 ermöglicht. Es kann auch eine Schwenktüre vorgesehen sein. Die Schiebetüre 112 ist insbesondere so an dem dritten Türelement 106 angeordnet und so ausgebildet, dass ihr Verschiebungsbereich auf das dritte Türelement 106 beschränkt ist. Dadurch kann bei geschlossener Stellung 114 der Schiebetüre 98 über die Schiebetüre 112 ein Zugang in den Arbeitsraum 34 geschaffen werden.

Der entsprechenden Türe für den "kleinen Zugang" kann eine Sensoreinrichtung zugeordnet sein, durch welche detektierbar ist, ob die Türe geöffnet ist. Es kann dann beispielsweise eine Sicherheitsabschaltung der Werkzeugmaschine initiiert werden.

Eine Verschiebungsrichtung der Schiebetüre 112 an der Schiebetüre 98 ist dabei im Wesentlichen parallel zur z-Richtung.

Alternativ oder zusätzlich kann an dem dritten Türelement 106 ein Fenster angeordnet sein, über das der Arbeitsraum beobachtbar ist.

Die Schiebetüre 98 mit ihrem ersten Türelement 100, dem zweiten Türelement 104 und dem dritten Türelement 106 ist an der zweiten Bahnführungseinrichtung 60 verschieblich geführt, wobei die Verschiebungsrichtung parallel zur z-Richtung ist. Zur Verschiebungsführung ist eine entsprechende Führungseinrichtung 116 vorgesehen. Diese umfasst eine Führungsleiste 118, welche an oder in der Nähe der Führungsleiste 76b für den ersten Schieber 68 und den zweiten Schieber 70 angeordnet ist oder an dieser gebildet ist. Ferner umfasst sie eine Führungsleiste 120, welche in der y-Richtung beabstandet zu der Führungsleiste 76a angeordnet ist. Weiterhin umfasst sie eine Führungsleiste 121, welche an dem Deckenbereich 84 angeordnet ist.

Über die Führungseinrichtung 116 ist beim Übergang zwischen einer offenen Stellung und einer geschlossenen Stellung und umgekehrt das dritte Türelement 106 oberhalb der Führungsleiste 118 geführt. Das zweite Türelement 104 und das dritte Türelement 106 sind an der Führungsleiste 118 und an der Führungsleiste 120 geführt.

Die Schiebetür 98 mit dem zweiten Türelement 104 und dem dritten Türelement 106 ist so ausgebildet, dass in der geschlossenen Stellung 114 der Schiebetür 98 der entsprechende Werkstückschlitten (in dem gezeigten Beispiel der zweite Werkstückschlitten 54) durch einen Durchtauchraum 122 bei seiner Verschiebungsbewegung durchtauchbar ist. Der Durchtauchraum 122 für die Bahnführung des Werkstückschlittens 54 bei der Werkstückbearbeitung und/oder Werkstückzuführung/Werkstückabführung in eine Bearbeitungsposition/aus einer Bearbeitungsposition ist nach oben durch das zweite Türelement 104 und seitlich durch das erste Türelement 100 begrenzt.

Über diesen Durchtauchraum 122 wiederum lässt sich die Schiebetüre 98 beim Öffnen über den zweiten Werkstückschlitten 54 schieben.

Der Zwischenraum 92 zwischen dem Arbeitsraumverkleidungsbereich 86 und dem Außenverkleidungsbereich 90 ist zur Aufnahme der Schiebetüre in deren offenen Stellung 124 vorgesehen. In dieser offenen Stellung ist der größte Teil des ersten Türelements (bis zum Türgriff 102), des zweiten Türelements 104 und des dritten Türelements 106 in diesen Zwischenraum 92 eingetaucht. Dadurch steht im Wesentlichen der gesamte zurückgesetzte Bereich 108 zwischen einer Oberseite und einer Unterseite (welche im Wesentlichen durch die Führungsleiste 120 begrenzt wird) zum Zugang für den Arbeitsraum 34 zur Verfügung. Es ist dabei allerdings die Führungsleiste 118 in dem zurückgesetzten Bereich 108 angeordnet.

Es kann vorgesehen sein, dass der entsprechende Teil der Führungsleiste 118 abnehmbar oder teleskopierbar ausgebildet ist, um einen größeren Zugangsbereich zu erhalten.

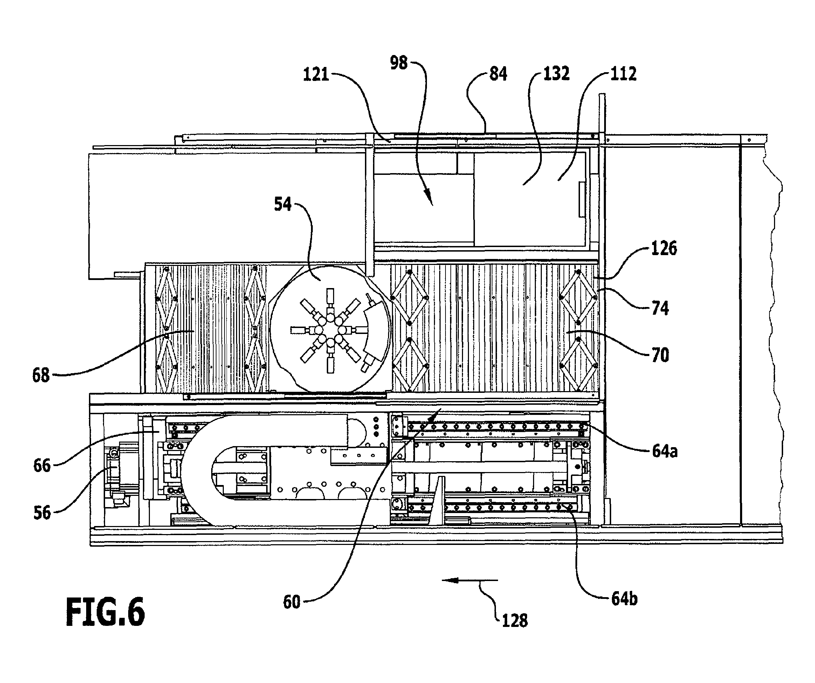

Der zweite Schieber 70 ist über eine Fixierungseinrichtung 126 mit dem Endbereich 74 der entsprechenden Bahnführungseinrichtung verbunden. Die Fixierungseinrichtung 126 ist so ausgebildet, dass die Fixierung des zweiten Schiebers 70 an dem Endbereich 74 lösbar ist. Der zweite Schieber 70 kann dann in einer Richtung 128 (Figur 6), welche parallel zur z-Richtung ist und von dem Hinterende 40 zum Vorderende 38 weist, verschoben werden, um eine Zugangsöffnung von dem Außenraum in den Arbeitsraum 34 bereitzustellen, welche im Bereich der Bahnführungseinrichtung 60 liegt.

Die Schiebetüre 98 kann von der offenen Stellung 124 in die geschlossene Stellung 114 durch Verschieben entgegen der Richtung 128 gebracht werden. Von der geschlossenen Stellung 114 kann sie durch Verschieben in die offene Stellung 124 in Richtung 128 gebracht werden.

Die erfindungsgemäße Werkzeugmaschine 10 funktioniert wie folgt:

Bei der Werkstückbearbeitung ist der Arbeitsraum 34 gegenüber dem Außenraum gekapselt. Er ist auch zu dem Vorderende 38 hin gekapselt (in den Zeichnungen aus darstellerischen Gründen nicht gezeigt).

Der erste Werkstückträger 94 und/oder der zweite Werkstückträger 96 hält (mindestens) ein Werkstück, welches der (mindestens einen) Werkzeugträgereinrichtung 32 zur Werkzeugbearbeitung zugeführt wird.

Es ist dabei möglich, dass jeweils nur ein Werkstückträger (und damit nur ein Werkstückschlitten) während der Werkstückbearbeitung innerhalb des Arbeitsraums 34 aktiviert ist oder dass beide Werkstückschlitten aktiviert sind. Sie können dabei getrennt voneinander aktiviert sein oder sie können miteinander geklemmt sein, um eine Werkstückschlitten-Kombination zu bilden.

Es kann ferner vorgesehen sein, dass ein Werkstückschlitten dazu benutzt wird, ein neu zu bearbeitendes Werkstück außerhalb des Arbeitsraums bereitzuhalten, während mittels des anderen Werkstückschlittens ein Werkstück bearbeitet wird.

Wenn ein Zugang zu dem Arbeitsraum 34 notwendig ist, um beispielsweise Wartungsarbeiten und Reparaturarbeiten durchzuführen, dann wird der entsprechende Werkstückschlitten (beispielsweise der zweite Werkstückschlitten 54) in eine Position gefahren, in welcher er eine durch die Schiebetüre 98 bereitgestellte Öffnung 130 in den Arbeitsraum 34 nicht verdeckt. Insbesondere wird er in Richtung des Vorderendes 38 gefahren, sofern er sich nicht dort bereits befindet.

Die Schiebetüre 98 wird in der Richtung 128 geöffnet. Die Schiebetüre 98 wird dabei über ihren größten Bereich in den Zwischenraum 92 eingetaucht.

Der zweite Schieber 70 wird über die Fixierungseinrichtung 126 von dem Endbereich 74 gelöst und ebenfalls in der Richtung 128 verschoben.

Gegebenenfalls kann auch noch ein Teilbereich der Führungsleiste 118, welcher an der Öffnung 130 liegt, abmontiert werden. Dieser Teilbereich der Führungsleiste kann beispielsweise auch teleskopierbar sein, um ihn aus der Öffnung 130 schieben zu können.

Es ist dadurch ein großer Zugangsbereich über die Öffnung 130 in den Arbeitsraum 34 bereitgestellt.

Durch Schieben entgegen der Richtung 128 wird die Öffnung 130 wieder geschlossen. (Zuvor wird der zweite Schieber 70 über die Fixierungseinrichtung 126 wiederum an dem Endbereich 74 fixiert.)

Ein Zugang über eine Öffnung 132 ist auch mittels der Schiebetüre 112 bzw. eine Schwenktüre möglich; es handelt sich dabei um einen "kleinen" Zugang. Die Fläche der Öffnung 132 ist kleiner als die der Öffnung 130.

## Patentansprüche

1. Werkzeugmaschine, umfassend ein Maschinengestell (14), mindestens eine Werkzeugträgereinrichtung (32), welche an dem Maschinengestell (14) beweglich gehalten ist, einen Arbeitsraum (34), in welchem Werkstücke bearbeitbar sind, eine Arbeitsraumverkleidung (82), und mindestens einen Werkstückschlitten (22; 24), welcher an einer Bahnführungseinrichtung (58; 60) relativ zum Maschinengestell (14) verschieblich ist, wobei die Bahnführungseinrichtung (58; 60) seitlich neben dem Arbeitsraum (34) angeordnet ist, **dadurch gekennzeichnet, dass** mindestens eine Schiebetüre (98) für einen Arbeitsraumzugang vorgesehen ist, welche an der Bahnführungseinrichtung (58; 60) des mindestens einen Werkstückschlittens (22; 24) angeordnet ist, und dass an dem mindestens einen Werkstückschlitten (22; 24) und einem Endbereich (72; 74) der zugeordneten Bahnführungseinrichtung (58; 60) mindestens ein beweglicher Schieber (68; 70) angeordnet ist, welcher die Bahnführungseinrichtung (58; 60) gegenüber dem Arbeitsraum (34) abdeckt.

2. Werkzeugmaschine nach Anspruch 1, **dadurch gekennzeichnet, dass** die mindestens eine Schiebetüre (98) parallel zu einer Verschiebungsrichtung (52; z) des mindestens einen Werkstücksschlittens (22; 24) verschieblich ist.

3. Werkzeugmaschine nach Anspruch 1 oder 2, **dadurch gekennzeichnet, dass** die mindestens eine Schiebetüre (98) einen Durchtauchraum (122) begrenzt, durch welchen der entsprechende Werkstückschlitten (22; 24) durchtauchbar ist.

4. Werkzeugmaschine nach einem der vorangehenden Ansprüche, **dadurch gekennzeichnet, dass** die mindestens eine Schiebetüre (98) zwischen einem Vorderende (38) der Werkzeugmaschine und dem Maschinengestell (14) angeordnet ist.

5. Werkzeugmaschine nach einem der vorangehenden Ansprüche, **gekennzeichnet durch** einen zurückgesetzten Bereich (108) an einer Außenseite, an welchem die mindestens eine Schiebetüre (98) mindestens in geschlossener Stellung (114) angeordnet ist.

6. Werkzeugmaschine nach einem der vorangehenden Ansprüche, **dadurch gekennzeichnet, dass** an der mindestens einen Schiebetüre (98) mindestens ein Fenster und/oder mindestens eine Tür (112) angeordnet ist, und insbesondere, dass die mindestens eine Tür eine Schiebetüre (112) oder Schwenktüre ist, und insbesondere, dass die mindestens eine Tür (112) einen Öffnungsbereich aufweist, welcher an der zugeordneten Schiebetüre (98) liegt.

7. Werkzeugmaschine nach einem der vorangehenden Ansprüche, **dadurch gekennzeichnet, dass** die mindestens eine Schiebetüre (98) ein erstes Türelement (100) aufweist, welches die Bahnführungseinrichtung (58; 60) zum Außenraum hin abdeckt, und insbesondere, dass die Bahnführungseinrichtung (58; 60) zwischen dem Arbeitsraum (34) und dem ersten Türelement (100) liegt, und insbesondere, dass die mindestens eine Schiebetüre (98) ein zweites Türelement (104) aufweist, welches an dem ersten Türelement (100) angeordnet ist und quer zu diesem orientiert ist und die Bahnführungseinrichtung (58; 60) zum Außenraum hin bezogen auf die Schwerkraftrichtung nach oben abdeckt, und insbesondere, dass das erste Türelement (100) zwischen der Bahnführungseinrichtung (58; 60) und einem Deckenbereich eines gegenüber dem Außenraum zurückgesetzten Bereichs (108) der Werkzeugmaschine liegt, und insbesondere, dass die mindestens eine Schiebetüre (98) ein drittes Türelement (106) aufweist, welches an dem zweiten Türelement (104) angeordnet ist und quer zu diesem orientiert ist, und insbesondere, dass das dritte Türelement (106) bis zu einem Deckenbereich (84) der Arbeitsraumverkleidung (82) reicht, und insbesondere, dass das dritte Türelement (106) mindestens näherungsweise parallel zum ersten Türelement (100) orientiert ist, und insbesondere, dass an dem dritten Türelement (106) mindestens ein Fenster und/oder mindestens eine Tür (112) angeordnet ist, und insbesondere, dass das dritte Türelement (106) den Arbeitsraum (34) begrenzt.

8. Werkzeugmaschine nach einem der vorangehenden Ansprüche, **dadurch gekennzeichnet, dass** die mindestens eine Schiebetüre (98) an der Bahnführungseinrichtung (58; 60) verschieblich gehalten ist.

9. Werkzeugmaschine nach einem der vorangehenden Ansprüche, **dadurch gekennzeichnet, dass** der mindestens eine Schieber (68; 70) zwischen dem Arbeitsraum (32) und einem Teilbereich (100) der mindestens einen Schiebetüre (98) angeordnet ist, und insbesondere, dass eine Fixierungseinrichtung (126) zur Fixierung des mindestens einen Schiebers (68; 70) an dem zugeordneten Werkstückschlitten (22; 24) und/oder dem Endbereich (72; 74) der zugeordneten Bahnführungseinrichtung (58; 60) so ausgebildet ist, dass die Fixierung von dem Außenraum her bei geöffneter mindestens einer Schiebetüre (98) lösbar ist.

10. Werkzeugmaschine nach einem der vorangehenden Ansprüche, **dadurch gekennzeichnet, dass** die mindestens eine Schiebetüre (98) beim Öffnen in einen Bereich hinter einer Außenverkleidung (88) der Werkzeugmaschine eintauchbar ist.

11. Werkzeugmaschine nach einem der vorangehenden Ansprüche, **dadurch gekennzeichnet, dass** die Bahnführungseinrichtung (58; 60) zwischen einem Bereich (86) der Arbeitsraumverkleidung (82) und einer Außenverkleidung (88) der Werkzeugmaschine angeordnet ist, und insbesondere, dass die mindestens eine Schiebetüre (98) beim Öffnen in einen Zwischenraum (92) zwischen einem Arbeitsraumverkleidungsbereich (86) und der Außenverkleidung (88) eintauchbar ist.

12. Werkzeugmaschine nach einem der vorangehenden Ansprüche, **gekennzeichnet durch** eine Führungseinrichtung (116) zur Schiebeführung der mindestens einen Schiebetüre (98), und insbesondere, dass die Führungseinrichtung (116) mindestens teilweise an der zugeordneten Bahnführungseinrichtung (58; 60) angeordnet oder ausgebildet ist, und insbesondere, dass mindestens eine Führungsleiste (118) für die mindestens eine Schiebetüre (98) vorgesehen ist, welche an einer Führungsleiste (76b) für mindestens einen Schieber (68; 70), welcher mit dem mindestens einen Werkstückschlitten (22; 24) verbunden ist, angeordnet und/oder ausgebildet ist, und insbesondere, dass mindestens eine Führungsleiste (120) für die mindestens eine Schiebetüre (98) vorgesehen ist, welche an oder in der Nähe einer Außenseite der Bahnführungseinrichtung (58; 60) des mindestens einen Werkstückschlittens (22; 24) angeordnet ist.

13. Werkzeugmaschine nach einem der vorangehenden Ansprüche, **gekennzeichnet durch** einen ersten Werkstückschlitten (22), welcher an einer ersten Bahnführungseinrichtung (58) verschieblich ist, und einen zweiten Werkstückschlitten (24), welcher an einer zweiten Bahnführungseinrichtung (60) verschieblich ist, wobei der Arbeitsraum (34) zwischen der ersten Bahnführungseinrichtung (58) und der zweiten Bahnführungseinrichtung (60) liegt.

14. Werkzeugmaschine nach Anspruch 13, **dadurch gekennzeichnet, dass** eine Verschiebungsrichtung (52; z) des ersten Werkstückschlittens (22) und eine Verschiebungsrichtung des zweiten Werkstückschlittens (24) parallel zueinander sind, und insbesondere, dass eine Verbindungseinrichtung zur Klemmung des ersten Werkstückschlittens (22) und des zweiten Werkstückschlittens (24) vorgesehen ist, und insbesondere, dass dem ersten Werkstückschlitten (22) ein eigener erster Antrieb (50) und dem zweiten Werkstückschlitten (54) ein eigener zweiter Antrieb (56) zugeordnet ist.

15. Werkzeugmaschine nach einem der vorangehenden Ansprüche, **dadurch gekennzeichnet, dass** die mindestens eine Werkzeugträgereinrichtung (32) mindestens in einer ersten Richtung (x) und einer senkrecht zur ersten Richtung (x) liegenden zweiten Richtung (y) am Maschinengestell (14) verschieblich ist.

## Claims

1. Machine tool, comprising a machine frame (14), at least one tool holder device (32) which is held for movement on the machine frame (14), a work space (34) in which workpieces are machinable, a work space cladding (82), and at least one workpiece carriage (22; 24) which is displaceable on a path guiding device (58; 60) relative to the machine frame (14), the path guiding device (58; 60) being arranged alongside the work space (34), **characterized in that** at least one sliding door (98) is provided for access to the work space, the sliding door being arranged on the path guiding device (58; 60) of the at least one workpiece carriage (22; 24), and **in that** there is arranged on the at least one workpiece carriage (22; 24) and at an end area (72: 74) of the associated path guiding device (58; 60) at least one movable slide (68; 70), which covers the path guiding device (58; 60) off from the work space (34).

2. Machine tool in accordance with claim 1, **characterized in that** the at least one sliding door (98) is displaceable parallel to a direction of displacement (52; z) of the at least one workpiece carriage (22; 24).

3. Machine tool in accordance with claim 1 or 2, **characterized in that** the at least one sliding door (98) delimits a transit space (122) for passage of the corresponding workpiece carriage (22; 24) therethrough.

4. Machine tool in accordance with any one of the preceding claims, **characterized in that** the at least one sliding door (98) is arranged between a front end (38) of the machine tool and the machine frame (14).

5. Machine tool in accordance with any one of the preceding claims, **characterized by** a recessed area (108) at an outer side, at which area the at least one sliding door (98) is arranged, at least in the closed position (114).

6. Machine tool in accordance with any one of the preceding claims, **characterized in that** at least one window and/or at least one door (112) is arranged on the least one sliding door (98), and, in particular, **in that** the at least one door is a sliding door (112) or a swing door, and, in particular, **in that** the at least one door (112) has an opening area that is located on the associated sliding door (98).

7. Machine tool in accordance with any one of the preceding claims, **characterized in that** the at least one sliding door (98) has a first door element (100) which covers the path guiding device (58; 60) towards the outside space, and, in particular, **in that** the path guiding device (58; 60) lies between the work space (34) and the first door element (100), and, in particular, **in that** the at least one sliding door (98) has a second door element (104) which is arranged on and orientated transversely to the first door element (100), and which covers the path guiding device (58; 60) upwards in relation to the direction of gravity towards the outside space, and, in particular, **in that** the first door element (100) lies between the path guiding device (58; 60) and a roof portion of an area (108) of the machine tool that is recessed in relation to the outside space, and, in particular, **in that** the at least one sliding door (98) has a third door element (106) which is arranged on and orientated transversely to the second door element (104), and, in particular, **in that** the third door element (106) extends as far as a roof portion (84) of the work space cladding (82), and, in particular, **in that** the third door element (106) is orientated at least approximately parallel to the first door element (100), and, in particular, **in that** at least one window and/or at least one door (112) is arranged on the third door element (106), and, in particular, **in that** the third door element (106) delimits the work space (34).

8. Machine tool in accordance with any one of the preceding claims, **characterized in that** the at least one sliding door (98) is held for displacement on the path guiding device (58; 60).

9. Machine tool in accordance with any one of the preceding claims, **characterized in that** the at least one slide (68; 70) is arranged between the work space (32) and a partial area (100) of the at least one sliding door (98), and, in particular, **in that** a fixing device (126) for fixing the at least one slide (68; 70) to the associated workpiece carriage (22; 24) and/or to the end area (72; 74) of the associated path guiding device (58; 60) is so constructed that the fixing is releasable from the outside space when the at least one sliding door (98) is open.

10. Machine tool in accordance with any one of the preceding claims, **characterized in that** the at least one sliding door (98), upon opening, passes into an area behind an outer cladding (88) of the machine tool.

11. Machine tool in accordance with any one of the preceding claims, **characterized in that** the path guiding device (58; 60) is arranged between a portion (86) of the work space cladding (82) and an outer cladding (88) of the machine tool, and, in particular, **in that** the at least one sliding door (98), upon opening, passes into a space (92) between a work space cladding portion (86) and the outer cladding (88).

12. Machine tool in accordance with any one of the preceding claims, **characterized by** a guiding device (116) for sliding guidance of the at least one sliding door (98), and, in particular, in that the guiding device (116) is at least partially arranged or formed on the associated path guiding device (58; 60), and, in particular, in that at least one guide rail (118) is provided for the at least one sliding door (98), which guide rail is arranged and/or formed on a guide rail (76b) for at least one slide (68; 70) which is connected to the at least one workpiece carriage (22; 24), and, in particular, in that at least one guide rail (120) is provided for the at least one sliding door (98), which guide rail is arranged at or in the vicinity of an outer side of the path guiding device (58; 60) of the at least one workpiece carriage (22; 24).

13. Machine tool in accordance with any one of the preceding claims, **characterized by** a first workpiece carriage (22) which is displaceable on a first path guiding device (58), and a second workpiece carriage (24) which is displaceable on a second path guiding device (60), the work space (34) lying between the first path guiding device (58) and the second path guiding device (60).

14. Machine tool in accordance with claim 13, **characterized in that** a direction of displacement (52; z) of the first workpiece carriage (22) and a direction of displacement of the second workpiece carriage (24) are parallel to each other, and, in particular, **in that** a connecting device is provided for clamping the first workpiece carriage (22) and the second workpiece carriage (24) together, and, in particular, **in that** the first workpiece carriage (22) has a first drive (50) of its own associated with it, and the second workpiece carriage (54) has a second drive (56) of its own associated with it.

15. Machine tool in accordance with any one of the preceding claims, **characterized in that** the at least one tool holder device (32) is displaceable in at least a first direction (x) and a second direction (y) perpendicular to the first direction (x) on the machine frame (14).

## Revendications

1. Machine-outil, comportant un bâti de machine (14), au moins un dispositif support d'outil (32) maintenu mobile sur le bâti de machine (14), une chambre de travail (34) dans laquelle des pièces peuvent être usinées, un revêtement de chambre de travail (82), et au moins un chariot porte-pièce (22 ; 24) mobile sur un dispositif de guidage de bande (58, 60) par rapport au bâti de machine (14), le dispositif de guidage de bande (58 ; 60) étant disposé à côté de la chambre de travail (34), **caractérisée en ce qu'**au moins une porte coulissante (98) pour un accès à la chambre de travail et disposée sur le dispositif de guidage de bande (58 ; 60) du ou des chariots porte-pièce (22 ; 24) est prévue, et **en ce qu'**au moins un coulisseau mobile (68 ; 70) recouvrant le dispositif de guidage de bande (58 ; 60) à l'opposé de la chambre de travail (34) est disposé sur la ou les chariots porte-pièce (22 ; 24) et une zone d'extrémité (72 ; 74) du dispositif de guidage de bande (58 ; 60) associé.

2. Machine-outil selon la revendication 1, **caractérisée en ce que** la ou les portes coulissantes (98) sont mobiles parallèlement à un dispositif de déplacement (52 ; z) du ou des chariots porte-pièce (22 ; 24).

3. Machine-outil selon la revendication 1 ou 2, **caractérisée en ce que** la ou les portes coulissantes (98) limitent une chambre de traversée par enfoncement (122) que le chariot porte-pièce (22 ; 24) correspondant peut traverser par enfoncement.

4. Machine-outil selon l'une quelconque des revendications précédentes, **caractérisée en ce que** la ou les portes coulissantes (98) sont disposées entre une extrémité avant (38) de la machine-outil et le bâti de machine (14).

5. Machine-outil selon l'une quelconque des revendications précédentes, **caractérisée par** une zone écartée (108) sur un côté extérieur sur lequel la ou les portes coulissantes (98) sont disposées au moins en position fermée (114).

6. Machine-outil selon l'une quelconque des revendications précédentes, **caractérisée en ce qu'**au moins une fenêtre et/ou au moins une porte (12) sont disposées sur la ou les portes coulissantes (98) et en particulier **en ce que** la ou les portes sont une porte coulissante (112) ou porte pivotante, et en particulier **en ce que** la ou les portes (112) comprennent une zone d'ouverture située sur la porte coulissante (98) associée.

7. Machine-outil selon l'une quelconque des revendications précédentes, **caractérisée en ce que** la ou les portes coulissantes (98) comprennent un premier élément formant porte (100) recouvrant le dispositif de guidage de bande (58 ; 60) en direction de l'espace extérieur et en particulier **en ce que** le dispositif de guidage de bande (58 ; 60) se situe entre l'espace de travail (34) et le premier élément formant porte (100), et en particulier **en ce que** la ou les portes coulissantes (98) comprennent un deuxième élément formant porte (104) disposé sur le premier élément formant porte (100) et orienté transversalement au dit premier élément formant porte et recouvrent vers le haut le dispositif de guidage de bande (58 ; 60) en direction de l'espace extérieur par rapport au sens de gravité, et en particulier **en ce que** le premier élément formant porte (100) se situe entre le dispositif de guidage de bande (58 ; 60) et une zone de plafond d'une zone (108) de la machine-outil écartée par rapport à l'espace extérieur, et en particulier **en ce que** la ou les portes coulissantes (98) comprennent un troisième élément formant porte disposé sur le deuxième élément formant porte (104) et orienté transversalement par rapport au dit deuxième élément formant porte (106), et en particulier **en ce que** le troisième élément formant porte (106) s'étend jusqu'à une zone de plafond (84) du revêtement de la chambre de travail (82), et en particulier **en ce que** le troisième élément formant porte (106) est orienté au moins presque parallèlement au troisième élément formant porte (100), et en particulier **en ce qu'**au moins une fenêtre et/ou au moins une porte (112) sont disposées sur le troisième élément formant porte (106), et en particulier **en ce que** le troisième élément formant porte (106) délimite la chambre de travail (34).

8. Machine-outil selon l'une quelconque des revendications précédentes, **caractérisée en ce que** la ou les portes coulissantes (98) sont maintenues mobiles sur le dispositif de guidage de bande (58 ; 60).

9. Machine-outil selon l'une quelconque des revendications précédentes, **caractérisée en ce que** le ou les coulisseaux (68 ; 70) sont disposés entre la chambre de travail (32) et une zone partielle (100) de la ou des portes coulissantes (98), et en particulier **en ce qu'**un dispositif de fixation (126) permettant de fixer le ou les coulisseaux (68 ; 70) sur le chariot porte-pièce (22 ; 24) associé et/ou la zone d'extrémité (72 ; 74) du dispositif de guidage de bande (58 ; 60) associé est conçu de sorte que la fixation est libérable depuis l'espace extérieur lorsqu'au moins une porte coulissante (98) est ouverte.

10. Machine-outil selon l'une quelconque des revendications précédentes, **caractérisée en ce que** la ou les portes coulissantes (98), à leur ouverture, peuvent être enfoncées dans une zone située derrière un revêtement extérieur (88) de la machine-outil.

11. Machine-outil selon l'une quelconque des revendications précédentes, **caractérisée en ce que** le dispositif de guidage de bande (58 ; 60) est disposé entre une zone (86) du revêtement de chambre de travail (82) et un revêtement extérieur (88) de la machine-outil, et en particulier **en ce que** la ou les portes coulissantes (98), à leur ouverture, peuvent être enfoncées dans un espace intermédiaire (92) entre une zone de revêtement de chambre de travail (86) et le revêtement extérieur (88).

12. Machine-outil selon l'une quelconque des revendications précédentes, **caractérisée par** un dispositif de guidage (116) pour le guidage coulissant de la ou des portes coulissantes (98), et en particulier en ce que le dispositif de guidage (116) est disposé ou conçu au moins en partie sur le dispositif de guidage de bande (58 ; 60) associé, et en particulier en ce qu'au moins une baguette de guidage (118) pour la ou les portes coulissantes (98) disposée et/ou conçue sur une baguette de guidage (76b) pour au moins un coulisseau (68 ; 70) relié au ou aux chariots porte-pièce (22 ; 24) est prévue, et en particulier en ce qu'au moins une baguette de guidage (120) pour la ou portes coulissantes (98) disposée sur un côté extérieur ou à proximité dudit côté extérieur du dispositif de guidage de bande (58 ; 60) du ou des chariots porte-pièce (22 ; 34) est prévue.

13. Machine-outil selon l'une quelconque des revendications précédentes, **caractérisée par** un premier chariot porte-pièce (22) mobile sur un premier dispositif de guidage de bande (58), et un second chariot porte-pièce (24) mobile sur un second dispositif de guidage de bande (60), l'espace de travail (34) se situant entre le premier dispositif de guidage de bande (58) et le second dispositif de guidage (60).

14. Machine-outil selon la revendication 13, **caractérisée en ce qu'**une direction de déplacement (52 ; z) du premier chariot porte-pièce (22) et une direction de déplacement du second chariot porte-pièce (24) sont parallèles, et en particulier, **en ce qu'**un dispositif de liaison permettant de serrer le premier chariot porte-pièce (22) et le second chariot porte-pièce (24) est prévu, et en particulier **en ce qu'**un premier entraînement distinct (50) est associé au premier chariot porte-pièce (22) et un second chariot distinct (56) est associé au second chariot porte-pièce (54).

15. Machine-outil selon l'une quelconque des revendications précédentes, **caractérisée en ce que** le ou les dispositifs porte-outil (32) sont mobiles sur le bâti de machine (14) au moins dans une première direction (x) et une seconde direction (y) perpendiculaire à la première direction.
